# EUROPEAN PATENT APPLICATION

(11) **EP 2 348 506 A2**
(43) Date of publication of application: **27.07.2011**
(21) Application number: 11000390.2
(22) Date of filing: 19.01.2011
(51) Int. Cl.: G11B 17/028, G11B 17/056

(54) **Optical disc drive**

(30) Priority: 20.01.2010 KR 20100005097
(71) Applicant: Hitachi-LG Data Storage Korea, Inc., Geumcheon-gu Seoul 153-803 (KR)
(72) Inventor: Kim, Youngwoo, Geumcheon-gu Seoul 153-803 (KR)
(74) Representative: Katérle, Axel

(57) **Abstract**

Disclosed is an optical disc drive. The optical disc drive may include a clamp unit for chucking an optical disc; at least one lifting projection protruding from the clamp unit; and a moving force transfer unit for transferring a moving force, of moving the clamp unit in an axial direction of the clamp unit, to the clamp unit through the lifting projection, wherein the moving force transfer unit includes a guide for moving the lifting projection in the axial direction by a movement in a direction perpendicular to the axial direction, and a protective part provided at at least one of both ends of the guide and protecting the lifting projection. Accordingly, when an optical disc rotates at high speed, noise generation at a joined portion between the guide of the moving force transfer unit and the lifting projection can be suppressed.

## Description

This application claims the benefit of priority of Korean Patent Application No. 10-2010-0005097 filed on January 20, 2010, which is incorporated by reference in their entirety herein.

### BACKGROUND

### Field

This document relates to an optical disc drive, and more particularly, to a device capable of reducing noise generation caused by friction when a disc rotates in an optical disc drive.

### Related Art

In general, an optical disc drive (ODD) refers to a device that records or reads data from various types of optical discs, such as compact discs (CD), digital versatile discs (DVD), blu-ray discs (BD) or the like, by using a laser.

An optical disc has high capacity while being convenient to carry. The optical disc, which was not re-recordable in the past, is now under development to be recordable to thereby increase convenience.

An optical disc drive, recording or reading data on or from an optical disc, may be classified as a tray type in which an optical disc is loaded or unloaded by using a tray, and a slot-in type in which an optical disc, when put into a front slot, is automatically inserted into an optical disc drive by a driving motor.

The optical disc, placed in the optical disc drive, rotates at a high speed upon receiving a driving force from a spindle motor. When the optical disc rotates, an optical pickup moves in a radial direction of the optical disc to thereby record information or read recorded information on the optical disc.

### Summary

It is, therefore, an object of the present invention to efficiently provide an optical disc drive capable of suppressing noise generation caused by friction between components that vertically move a clamp serving to clamp an optical disc when the optical disc rotates.

According to an aspect of the present invention, there is provided an optical disc drive including: a clamp unit for chucking an optical disc; at least one lifting projection protruding from the clamp unit; and a moving force transfer unit for transferring a moving force, of moving the clamp unit in an axial direction of the clamp unit, to the clamp unit through the lifting projection, wherein the moving force transfer unit includes a guide for moving the lifting projection in the axial direction by a movement in a direction perpendicular to the axial direction, and a protective part provided at at least one of both ends of the guide and protecting the lifting projection.

The protective part may be provided at one of both ends of the guide at which the lifting projection is placed after the clamp unit ascends and performs chucking upon the optical disc.

The protective part may be formed of a rubber material, and may be formed at the guide by a coating method.

The guide of the moving force transfer unit may be formed of a plastic material.

The optical disc drive may further include a lifting projection coupling body rotatably coupled to the lifting projection and contacting the guide of the moving force transfer unit.

### Brief Description of the Drawings

The above and other objects and features of the present invention will become apparent from the following description of preferred embodiments given in conjunction with the accompanying drawings, in which:
FIG. 1 is a perspective view illustrating a slot-in type optical disc drive according to an exemplary embodiment of the present invention;
FIG. 2 is a plan view illustrating the optical disc drive of FIG. 1;
FIG. 3 is a plan view illustrating a clamp unit of FIG. 2;
FIG. 4 is a view illustrating a coupling state between the clamp unit of FIG. 3 and a moving force transfer unit, according to an exemplary embodiment of the present invention;
FIG. 5 is a side view illustrating a process in which a lifting projection coupling body moves along the moving force transfer unit according to an exemplary embodiment of the present invention;
FIGS. 6 and 7 are perspective views illustrating how the lifting projection coupling body moves along the moving force transfer unit; and
FIG. 8 is a view illustrating protective parts provided at both ends of a guide of the moving force transfer unit, guiding a lifting projection, to protect the lifting projection.

### Detailed Description of the Embodiments

Exemplary embodiments of the present invention will now be described in detail with reference to the accompanying drawings. The present invention may be modified variably and may have various embodiments, particular examples of which will be illustrated in drawings and described in detail. In the drawings, the same reference numerals will be used throughout to designate the same or like components. Moreover, detailed descriptions related to well-known functions or configurations will be ruled out in order not to unnecessarily obscure subject matters of the present invention. While terms such as "first" and "second," etc., may be used to describe various components, such components must not be understood as being limited to the above terms. The above terms are used only to distinguish one component from another.

Hereinafter, an optical disc drive will be described in detail with reference to the accompanying drawings. The terms used in the present application are merely used to describe particular embodiments, and are not intended to limit the present invention.

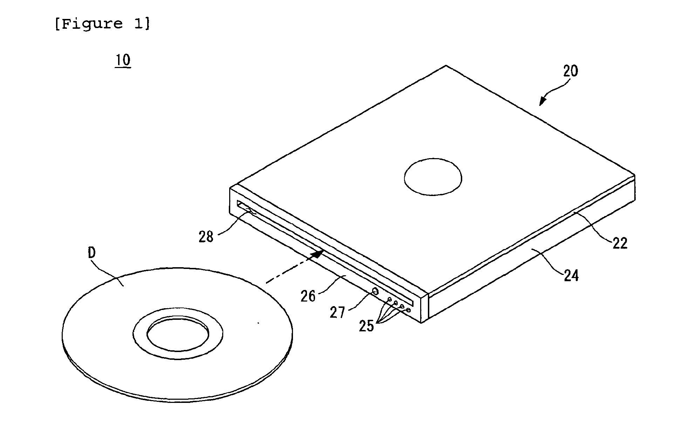

FIG. 1 is a perspective view illustrating a slot-in type optical disc drive according to an exemplary embodiment of the present invention.

As shown, a slot-in type optical disc drive 10 includes a body 20, a bezel 26 placed at the front side of the body 20, and an optical disc insertion slot 28 provided in the bezel 26.

The body 20 constitutes the exterior of the optical disc drive 10. The body 20, constituting the exterior thereof, protects each internal component from external shock. The slot-in type optical disc drive 10, according to an exemplary embodiment, may be designed to have a thinner body 20 than that of a tray type optical disc drive having a component such as a tray and the like installed inside. The body 20 is formed by assembling a cover chassis 22 with a bottom chassis 24. The cover chassis 22 and the bottom chassis 24 may be prepared by press-processing a steel plate into an appropriate shape, injection-molding plastic, or the like.

The bezel 26 is provided at the front side of the body 20. The bezel 26 may be separately provided by subjecting plastic to injection-molding. As occasion demands, the bezel 26 may be molded integrally with the cover chassis 22 and the bottom chassis 24. The bezel 26 may be provided with an operation button 27 for controlling the operation of the optical disc drive 10, and a display lamp 25 indicating an operational state of the optical disc drive 10. Furthermore, the optical disc insertion slot 28 may be provided in the bezel 26.

The optical disc insertion slot 28 is a path through which an optical disc D is inserted into the body 20 to be loaded or a loaded optical disc D is ejected to the outside of the body 20 to be unloaded. The slot-in type optical disc drive 10, according to the exemplary embodiment of the present invention, does not adopt a method of inserting and ejecting a tray. Accordingly, the optical disc D may be loaded by slightly pushing the optical disc D into the optical disc insertion slot 28, without using a separately structure protruding outwardly of the body 20.

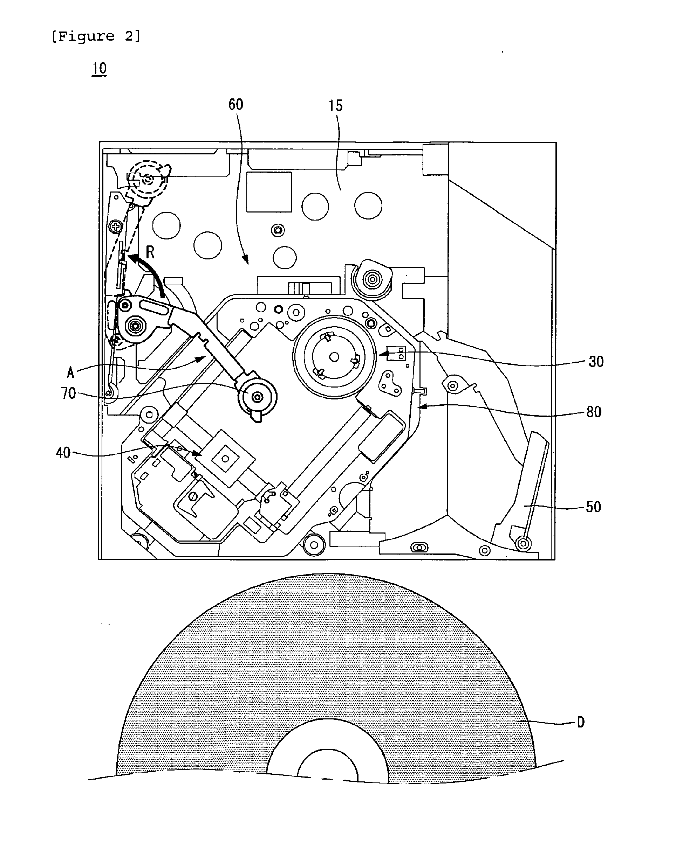

FIG. 2 is a plan view illustrating the optical disc drive of FIG. 1.

As shown in the drawing, the optical disc drive 10, according to an exemplary embodiment of the present invention, includes an optical pickup unit 40 reading or recording data from or on the optical disc D that is in rotation, guide arms 50 and 70 guiding a movement in a loading or unloading process of the optical disc D, and a clamp unit 30 performing chucking upon the loaded optical disc D and generating rotary force.

The optical pickup unit 40 is a component that read or records data on or from the optical D that is spinning after chucking. The optical pickup unit 40 includes an optical pickup emitting laser beams to the surface of the optical disc D and sensing reflected laser beams to thereby read data on the optical disc D, and an optical pickup moving part (not shown) moving the optical pickup to an appropriate location to read or record data.

The guide arms 50 and 70 apply a driving force to the optical disc D being loaded or unloaded, or guide the optical disc D to be in position. The guide arms 50 and 70 include a roller guide (not shown) provided parallel to the optical disc insertion slot 28 and contacting one side of the optical disc D being loaded or unloaded to thereby apply a driving force to the optical disc D, and first and second guide arms 50 and 70 respectively positioned on the right and left sides of the optical disc D, being loaded or unloaded, to guide a movement of the optical disc D. In FIG. 2, the first guide arm 50 is located on the right side with reference to the clamp unit 30, while the second guide arm 70 is located on the left side.

When the optical disc D is inserted, the first guide arm 50 first comes into contact with the outer circumferential surface of the optical disc D, being loaded, and moves along the outer circumferential surface of the optical disc D. The first guide arm 50 restrains the optical disc D, being inserted, from moving in the right direction. In detail, when a user exerts external force on the optical disc insertion slot 28 of FIG. 1, the optical disc D is loaded into the optical disc drive 10 by the force pushing the optical disc D inwardly and the driving force applied by the roller guide (not shown). In this case, the optical disc D, even when pushed to the right side, is retrained from being moved by the first guide arm 50. Furthermore, in the case in which the optical disc D has been loaded to more than a predetermined extent, the first guide arm 50 serves to push the optical disc D into the optical disc drive 10.

When the optical disc D is inserted, the second guide arm 70, after the first guide arm 50, comes into contact with the outer circumferential surface of the optical disc D. The second guide arm 70 guides the movement of the optical disc D from the left front side of the optical disc D being inserted. In more detail, when the side surface of the optical disc D, being loaded after being inserted through the optical disc insertion slot 28 of FIG. 1, comes into contact with the second guide arm 70 at an initial position A. The second guide arm 70 is then pivoted on a hinge shaft in a pivoting direction R. The second guide arm 70, when pivoted on the hinge shaft in the pivoting direction R, may be moved to a final location. When the second guide arm 70 reaches the final location, the loading process of the optical disc D is terminated, and a chucking process is carried out by the clamp unit 30.

The clamp unit 30 refers to a device that rotates the optical disc D by a rotary force generated by the spindle motor (not shown). The clamp unit 30 includes a turntable 34 coming into contact with the inner circumference of the optical disc D, a clamp head 36 coupled to an upper clamp (not shown), an optical disc securing part 38 generating a coupling force with the inner circumference of the optical disc D, and a lifting frame 32 chucking the loaded optical disc D.

Among the constituents of the clamp unit 30, the turntable 34 is a part that comes in contact with the inner circumference of the optical disc D. Here, the inner circumference means the innermost side of the optical disc D, and no data is recorded on the inner circumference thereof. When the lifting frame 32 ascends, the turntable 34 contacts a region corresponding to the upper clamp (not shown) and the optical disc D is interposed therebetween to thereby be secured. The turntable 34 may be formed of a rubber material or a soft plastic material in order to enhance a contact force with respect to the optical disc D.

The clamp head 36 protrudes upwardly from the central portion of the turntable 34. When the lifting frame 32 ascends, the clamp head 36 is coupled to the upper clamp (not shown). This coupling of the clamp head 36 with the upper clamp (not shown) is not released until the lifting frame 32 descends. Furthermore, the clamp head 36 is provided with the optical disc securing part 38 to assist the coupling between the clamp head 36 and the upper clamp (not shown) and between the clamp head 36 and the optical disc D.

The lifting frame 32 is prepared obliquely in a diagonal direction with respect to the central portion of the optical disc drive 10. When the loading of the optical disc D is completed, the lifting frame 32 moves upwards, namely, in a thickness direction of the optical disc drive 10. When the lifting frame 32 ascends, each constituent of the clamp unit 30 mounted to interwork with the lifting frame 32 moves upwards and may thus be coupled to the upper clamp (not shown).

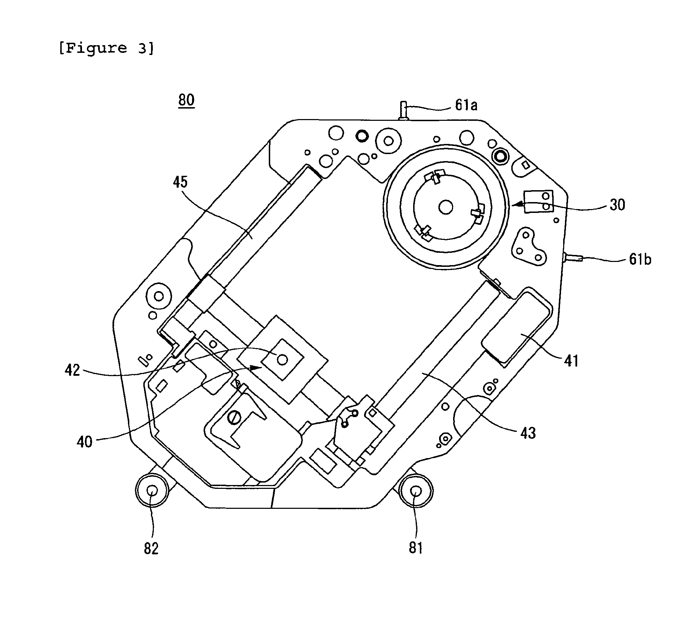

FIG. 3 is a plan view of the clamp unit of FIG. 2.

As shown therein, the clamp unit 30, according to an exemplary embodiment of the present invention, may include lifting projections 61a and 61b protruding from the lifting frame 32.

The lifting frame 32 may be coupled to the clamp unit 30. Rods 43 and 45 by which the optical pickup unit 40 is moved may be coupled to the lifting frame 32. When an optical pickup moving motor 42 rotates, the optical pickup unit 40 may move forward and backward directions along the rods 43 and 45. When the optical pickup unit 40 is located at an appropriate position by the forward and backward movements thereof, an optical pickup 42 emits laser beams onto the optical disc D to read data. The lifting projections 61a and 61b may be prepared on at least one side of the lifting frame 32.

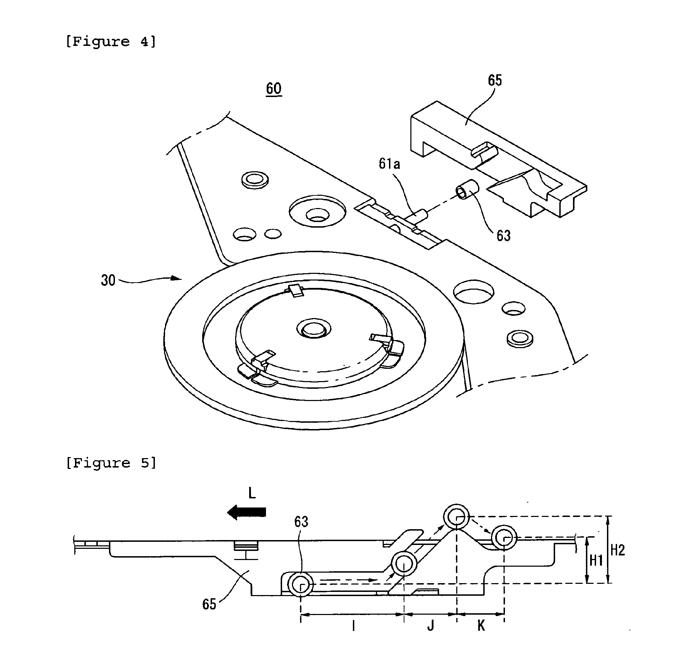

The lifting projections 61a and 61b may be respectively configured as bosses protruding from the lifting frame 32 in the direction of a moving force transfer unit 65 (see FIG. 4). The lifting projections 61a and 61b may include a first lifting projection 61a and a second lifting projection 61b according to design needs. In this case, only one of the first and second lifting projections 61a and 61b may receive the moving force from the moving force transfer unit 64 of Fig. 4. In the following disclosure, the following description of the first lifting projection 61a may substitute for a description of the second lifting projection 61b.

The first lifting projection 61a may be formed integrally with the lifting frame 32. The lifting frame 32 may be formed of a metallic material. Therefore, the first lifting projection 61a, formed integrally with the lifting frame 32, may also be formed of the metallic material. Noise may be generated when the first lifting projection 61a of the metallic material comes in direct contact with the moving force transfer unit 65 of FIG. 4. Furthermore, this direct contact may result in damage to the moving force transfer unit 65 of FIG. 4, formed of a synthetic resin material having a relatively low strength. Therefore, a lifting projection coupling body 63 (see FIG. 4), formed of a synthetic resin material, may be coupled to the first lifting projection 61a.

FIG. 4 is a view illustrating a coupling state between the clamp unit of FIG. 3 and the moving force transfer unit.

As shown therein, the clamp unit 30 and the moving force transfer unit 65, according to an exemplary embodiment of the present invention, may contact each other by the medium of the lifting projection coupling body 63.

The moving force transfer unit 65 may move in a horizontal direction upon receiving force generated from a driving unit (not shown). The moving force transfer unit 65 may be provided with a guide that guides the vertical movement of the lifting projection coupling body 63, and this will be described later in more detail. As the moving force transfer unit 65 moves in a horizontal direction, the lifting projection coupling body 63 moves along the guide. The movement of the lifting projection coupling body 63 along the guide leads to a movement of the first lifting projection 61a coupled to the lifting projection coupling body 63. When the first lifting projection 61a is moved, the clamp unit 30 coupled thereto is moved upwardly. Accordingly, the clamp head 36, provided at the clamp unit 30, is coupled to the upper clamp (not shown).

The moving force transfer unit 65 may be formed of a synthetic resin material. Furthermore, the moving force transfer unit 65 may be formed by injecting-molding a synthetic resin of a plastic material. The plastic material forming the moving force transfer unit 65 may be engineering plastic with enhanced strength. Since the moving force transfer unit 65 is formed of plastic, a reduction in noise generation may be achieved even when the moving force transfer unit 65 contacts the lifting projection coupling body 63 of a synthetic resin material. That is, the noise suppression effect is expected since the two components formed of synthetic resin materials contact each other, unlike the related art in which a metal-metal contact occurs.

The lifting projection coupling body 63 may be rotatably coupled to the first lifting projection 61a. The lifting projection coupling body 63, formed of a rubber material and rotatably coupled to the first lifting projection 61a of a metallic material, may be substantially in line contact with the surface of the moving force transfer unit 65. While the moving force transfer unit 65 moves in a length direction thereof, the lifting projection coupling body 63 in contact with the moving force transfer unit 65 may rotate, moving along the guide provided at the moving force transfer unit 65. As the lifting projection coupling body 63 moves along the guide and passes over a first inclined surface, the first lifting projection 61a is moved upwardly. As the first lifting projection 61a ascends, the clamp unit 30 coupled therewith may be moved upwardly.

FIG. 5 is a side view illustrating a process in which the lifting projection coupling body 63 is moved along the moving force transfer unit.

As shown therein, the lifting projection coupling body 63, according to an exemplary embodiment of the present invention, may move along the guide provided at the moving force transfer unit 65. This will now be described in more detail.

When the optical disc D of FIG. 2 is loaded and the inner circumference of the optical disc D of FIG. 2 is positioned on the clamp unit 30 of FIG. 2, a control unit (not shown) applies a control signal to thereby move the moving force transfer unit 65 in the direction of an arrow L, i.e., a first direction.

As the moving force transfer unit 65 is moved in the first direction L, the lifting projection coupling body 63 moves along the guide. Meanwhile, in this exemplary embodiment, the lifting projection coupling body 63 is illustrated and described as if it is moving, for better understanding. However, it should be noted that the moving force transfer unit 65 substantially moves in the first direction L.

In a first section I, the lifting projection coupling body 63 may be moved in a horizontal direction.

In a second section J, the lifting projection coupling body 63 may ascend along the first inclined surface of the guide. That is, the clamp unit 30 of FIG. 2 is gradually moved upwards in the second section J. The lifting projection coupling body 63 reaches the highest point at the boundary between the second section J and a third section K. That is, the lifting projection coupling body 63 is placed higher than in the first section I, the lowest point, by a height difference of H2. At this time, the clamp unit 30 of FIG. 2 is positioned in the highest position accordingly.

In the third section K, a second inclined surface, slanted downwards, may be provided unlike in the second section J. Since the lifting projection coupling body 63 descends and is positioned at a height of H1 in the third section K, the clamp unit 30 of FIG. 2 can stably maintain a chucking state even when external shock is exerted thereupon or the optical disc D of FIG. 2 vibrates while rotating.

Since the lifting projection coupling body 63 of a rubber material and the moving force transfer unit 65 of a plastic material move in line contact with each other from the first section I to the third section K, noise generation can be suppressed. Furthermore, even when the lifting projection coupling body 63 is vibrated due to vibrations or the like of the optical disc drive 10 of FIG. 1, noise generation, caused by such vibrations, can be suppressed in relation with the moving force transfer unit 65.

When a control signal to unload the chucked optical disc D of FIG. 2 is input, the moving force transfer unit 65 is moved in an opposite direction to the first direction L. Accordingly, the lifting projection coupling body 63 moves to the first section I such that the chucking of the optical disc D of FIG. 2 is released.

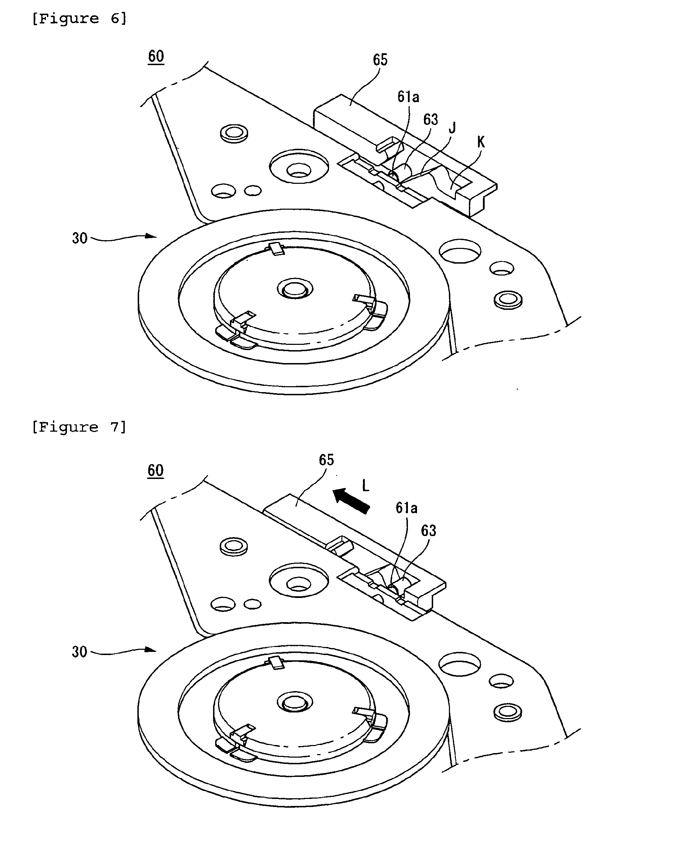

FIGS. 6 and 7 are perspective views illustrating how the lifting projection coupling body moves along the moving force transfer unit.

As shown in the drawings, the lifting projection coupling body 63, according to an exemplary embodiment of the present invention, may move along the guide of the moving force transfer unit 65.

As shown in FIG. 6, the lifting projection coupling body 63, coupled to the first lifting projection 61a, may be placed at the lowest point in the first section I of FIG. 5. In this case, the clamp unit 30 is placed in the lowest position accordingly.

As shown in FIG. 7, as the moving force transfer unit 65 moves in the first direction L, the lifting projection coupling body 63 moves to the third section K of FIG. 5. When the lifting projection coupling body 63 is in the third section K of FIG. 5, the clamp unit 30, having ascended, is moved downwards and is positioned in a chucking location.

As the lifting projection coupling body 63 moves along the moving force transfer unit 65, a plastic-rubber contact occurs to thereby minimize noise generation. In addition, even when vibrations are caused in the chucking location and the lifting projection coupling body 63 is thus vibrated, noise generation in a contact surface with the moving force transfer unit 65 may be minimized.

In the above embodiment, the moving force transfer unit is formed of plastic while the lifting projection coupling body is formed of rubber. However, the materials of the moving force transfer unit and the lifting projection coupling body are not limited thereto. That is, the lifting projection coupling body may be formed of plastic while the moving force transfer unit is formed of rubber, or both of the two structures may be formed of a rubber material.

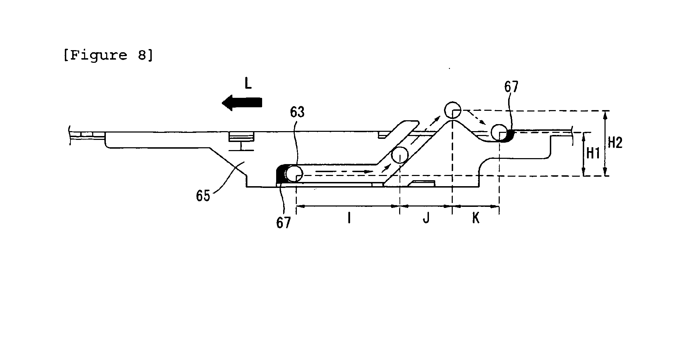

Meanwhile, FIG. 8 is a view illustrating protective parts 67 provided at both ends of the guide of the moving force transfer unit 65, guiding a lifting projection 61, to protect the lifting projection 61 according to another exemplary embodiment of the present invention.

Noise generation by the lifting projection 61 and the moving force transfer unit65 is caused chiefly due to friction between the lifting projection 61 and the moving force transfer unit 65, when the optical disc D coupled to the upper clamp (not shown) and the turntable of the clamp unit 30 is in rotation. This occurs when the lifting projection 61 is positioned at the right end of the third section K in FIG. 8.

Therefore, the protective part 67 of an elastic material, such as rubber, is installed at the end of the guide of the moving force transfer unit 65 in order to protect the lifting projection 61. Thus, when the optical disc D is in rotation, noise generation, caused by friction between the lifting projection 61 and the moving force transfer unit 65, can be suppressed.

The protective part 67 may be additionally attached to the end of the guide of the moving force transfer unit 65, that is, a location where the lifting projection 61 is placed after the chucking of the clamp unit 30. Alternatively, the protective part 67 may be formed by a method of coating the end of the guide of the moving force transfer unit 65 with an elastic material. The protective part 67 may also be installed at the end of the guide in the first section I in FIG. 8, as well as the end of the guide of the moving force transfer unit 65 in the third section K in FIG. 8.

Also, the embodiment of FIG. 8 may be combined with an embodiment in which the lifting projection coupling body 63 is coupled to the lifting projection 61 as in the embodiments of FIGS. 4 through 7.

As set forth herein, according to the optical disc drive according to the exemplary embodiments of the present invention, the moving force transfer unit transferring a moving force for the clamp unit and the corresponding lifting projection coupling body are formed of synthetic resin materials, so that noise generation can be suppressed at the joined portion between the moving force transfer unit and the lifting projection coupling body.

Furthermore, a reduction in noise generation, caused by friction between the lifting projection and the moving force transfer unit when an optical disc is in rotation, can be achieved.

While the present invention has been shown and described in connection with the exemplary embodiments, it will be apparent to those skilled in the art that modifications and variations can be made without departing from the spirit and scope of the invention as defined by the appended claims.

## Claims

1. An optical disc drive comprising:
a clamp unit for chucking an optical disc;
at least one lifting projection protruding from the clamp unit; and
a moving force transfer unit for transferring a moving force, of moving the clamp unit in an axial direction of the clamp unit, to the clamp unit through the lifting projection,
wherein the moving force transfer unit includes a guide for moving the lifting projection in the axial direction by a movement in a direction perpendicular to the axial direction, and a protective part provided at at least one of both ends of the guide and protecting the lifting projection.

2. The optical disc drive of claim 1, wherein the protective part is provided at one of both ends of the guide at which the lifting projection is placed after the clamp unit ascends and performs chucking upon the optical disc.

3. The optical disc drive of claim 2, wherein the protective part is formed of a rubber material.

4. The optical disc drive of claim 3, wherein the protective part is formed at the guide by a coating method.

5. The optical disc drive of claim 1, wherein the guide of the moving force transfer unit is formed of a plastic material.

6. The optical disc drive of claim 1, further comprising a lifting projection coupling body rotatably coupled to the lifting projection and contacting the guide of the moving force transfer unit.
